# EUROPÄISCHE PATENTANMELDUNG

(11) **EP 2 353 377 A1**
(43) Veröffentlichungstag der Anmeldung: **10.08.2011**
(21) Anmeldenummer: 10000810.1
(22) Anmeldetag: 27.01.2010
(51) Int. Cl.: A01K 5/02, A01K 39/01

(54) **Futteranlage und Verfahren für die Bereitstellung von Geflügelfutter**

(71) Anmelder: Eskildsen GmbH, 04688 Mutzschen (DE); Fermentationexperts AS, 6622 Baekke (DK)
(72) Erfinder: Eskilsen, Lorenz, 04688 Mutzschen (DE); Legarth, Jens, 6622 Baekke (DK)
(74) Vertreter: Rings, Rolf

(57) **Zusammenfassung**

Futteranlage (10) für die Bereitstellung von Geflügelfutter, insbesondere von fermentiertem Feuchtfutter, für eine Mehrzahl von Geflügeltieren in einer Freiland- oder Stallhaltung, mit mindestens einer Fördereinrichtung (1), welche für das Geflügel mindestens abschnittsweise zugänglich ist, und mit einem Zuführabschnitt (3), über welchen Futter manuell oder maschinell bzw. automatisch zugeführt werden kann, wobei die Fördereinrichtung (1) mindestens ein schnell laufendes Förderband (2) mit einem oberen Fütterungsabschnitt (2a) und einem Rückführabschnitt (2b) ist und wobei eine Reinigungsvorrichtung (4) zum Entfernen von Resten des Futters in Förderrichtung nach dem Fütterungsabschnitt (2a) an dem Förderband (2) vorgesehen ist.

## Beschreibung

Die Erfindung betrifft eine Futteranlage für die Bereitstellung von Geflügelfutter, insbesondere von fermentiertem Feuchtfutter oder einer Mischung von Feuchtfutter und Trockenfutter, nach dem Oberbegriff des Anspruchs 1 sowie ein entsprechendes Verfahren für die Bereitstellung von Geflügelfutter für eine Mehrzahl von Geflügeltieren in einer Freiland- oder Stallhaltung nach den Merkmalen des Oberbegriffs des Anspruchs 12.

Geflügeltiere in einer Freilandaufzucht oder in einer Stallhaltung werden heutzutage mit sogenanntem Trockenfutter als Geflügelfutter gefüttert. Dabei werden den Tieren verschiedene Getreidearten, Mischungen von Getreidesorten oder in Pellets gepresste Trockenfuttermischungen durch eine großflächige Verteilung auf dem Stallboden oder über Futterrinnen bereitgestellt. Der Nachteil einer Fütterung von Geflügel mit derartigen Trockenfutterarten ist, dass das Trockenfutter relativ kostenintensiv in der Herstellung, in der Beschaffung und in der Bereitstellung bzw. Rationsgestaltung ist. In der Regel ist für die Fütterung mit Trockenfutter auch viel Handarbeit erforderlich. Des Weiteren ist das herkömmliche Trockenfutter für Geflügel auf eine relativ begrenzte Anzahl von Rohstoffen, wie beispielsweise verschiedene Getreidesorten, beschränkt. Das herkömmliche Trockenfutter für Geflügel ist außerdem auf eine maximale Menge von bestimmten Ingredienzien beschränkt, um die Verdaulichkeit nicht zu beeinträchtigen. Und schließlich sind bei der Herstellung von sogenannten Futter-Pellets als Trockenfutter zudem aufwendige Pressvorrichtungen und Trocknungsvorrichtungen zur Herstellung des in Pellets gepressten Futters erforderlich.

Die vorliegende Erfindung bezieht sich demgegenüber insbesondere auf die Bereitstellung von feuchtem Futter zur Geflügelfütterung einschließlich von Mischungen aus Trockenfutter und Feuchtfutter. Noch genauer bezieht sich die Erfindung nach einem vorteilhaften Aspekt auf die Bereitstellung von fermentiertem Feuchtfutter für eine Mehrzahl von Geflügeltieren in einer Stall- oder Freilandhaltung. Bei der Verfütterung von Feuchtfutter, wie beispielsweise fermentiertem Feuchtfutter, besteht ein Problem dahingehend, dass in den Futterrinnen verbleibende Futterbestandteile leicht schimmeln können und dann zu einem schnellen Verderben des Futters oder gar zu einer Gefährdung der Gesundheit der Tiere führen. Außerdem ist bei einer Verfütterung von feuchtem Futter an Geflügel die notwendige gleichmäßige Verteilung und Bereitstellung an eine große Anzahl von Geflügeltieren ein bisher ungelöstes Problem, so dass derartiges feuchtes Futter im Stand der Technik in der Regel nur an andere Tierarten, wie zum Beispiel Schweine, verfüttert wurde.

Das der Erfindung zugrundeliegende Problem ist es damit, eine Futteranlage sowie ein Verfahren für die Bereitstellung von Geflügelfutter bereitzustellen, mittels welchen eine Fütterung einer Vielzahl von Geflügeltieren im Wesentlichen gleichzeitig ermöglicht wird und dennoch eine gesundheitliche Gefährdung der Geflügeltiere aufgrund von schimmeligen Futterresten oder anderen schädlichen Bestandteilen in feuchtem Futter effektiv vermieden wird. Dieses Problem wird mit einer Futteranlage mit den Merkmalen nach Anspruch 1 sowie mit einem Verfahren mit den Schritten nach Anspruch 12 gelöst. Vorteilhafte Ausgestaltungen und Weiterbildungen der Erfindung sind Gegenstand der abhängigen Ansprüche.

Die erfindungsgemäße Futteranlage ist besonders für eine Bereitstellung von feuchtem Geflügelfutter oder einer Mischung von Trocken- und Feuchtfutter angepasst und ausgebildet. Insbesondere kann mit der erfindungsgemäßen Futteranlage nach Anspruch 1 fermentiertes Feuchtfutter an eine Mehrzahl von Geflügeltieren schnell, im Wesentlichen gleichzeitig und auf effiziente Art und Weise bereitgestellt werden. Die erfindungsgemäße Futteranlage weist hierzu mindestens eine Fördereinrichtung auf, welche für das Geflügel mindestens abschnittsweise in einem Fütterungsabschnitt zugänglich ist, und einen Zuführabschnitt, über welchen Futter manuell oder automatisch bzw. maschinell auf die Fördereinrichtung zugeführt werden kann, wobei die Futteranlage dadurch gekennzeichnet ist, dass die Fördereinrichtung mindestens ein schnell laufendes Förderband mit einem oberen Fütterungsabschnitt und einem Rückführabschnitt aufweist und dass eine Reinigungsvorrichtung zum Entfernen von Resten insbesondere des feuchten Futters in Förderrichtung nach dem Fütterungsabschnitt an dem Förderband vorgesehen ist. Durch das mindestens eine vergleichsweise schnell laufende Förderband wird das zugeführte Feuchtfutter oder die Futtermischung schnell auf eine relativ lange Strecke entlang dem Fütterungsabschnitt verteilt, so dass im Wesentlichen gleichzeitig eine große Anzahl von Geflügeltieren mit dem Feuchtfutter entlang dem Förderband versorgt wird. Ein schnell laufendes Förderband hat zudem den Vorteil, dass die Ausbringung und Verfütterung des feuchten Futters, das anfällig ist gegenüber der Bildung von Schimmel etc., relativ schnell erfolgt. Die Geschwindigkeit des mindestens einen schnell laufenden Förderbandes der Fördereinrichtung ist dabei vorzugsweise auf die Anzahl der zu fütternden Geflügeltiere, die Länge des Förderbandes etc. so eingestellt, dass eine ausreichende Verfütterung im Wesentlichen gleichzeitig entlang dem gesamten Fütterungsabschnitt gewährleistet ist und möglichst wenig Restfutter auf dem Förderband verbleibt. Nach einem Aspekt der Erfindung ist das schnell laufende Förderband ein Förderband mit einer Bandgeschwindigkeit von 1,2 bis 2,0 m/s, und vorteilhafterweise insbesondere von 1,5 m/s. Diese Geschwindigkeit erlaubt ein ausreichend schnelles Ausbringen der Futtermengen an eine Vielzahl von Geflügeltieren und weitestgehend gleichzeitiges und gleichmäßiges Füttern entlang dem Fütterungsabschnitt des Förderbandes.

Durch die erfindungsgemäß vorgesehene Reinigungsvorrichtung in einem Abschnitt in Förderrichtung nach dem Fütterungsabschnitt an dem Förderband wird gewährleistet, dass dennoch verbleibende Restbestandteile des Feuchtfutters im Wesentlichen vollständig von dem Förderband entfernt werden, bevor frisches Futter, beispielsweise fermentiertes Feuchtfutter, in dem Zuführabschnitt wieder auf das Förderband aufgebracht wird. Hierdurch wird vermieden, dass nicht mehr gute Restbestandteile oder Schmutzpartikel aus dem Stall in das neu zugeführte Feuchtfutter gelangen können, was zu einer gesundheitlichen Gefährdung der Tiere führen könnte. Die Reinigungsvorrichtung ist dabei nach einem vorteilhaften Aspekt der Erfindung in ihrer Art und Ausgestaltung so realisiert, dass ein möglichst vollständiges Entfernen von insbesondere feuchten Futterbestandteilen von dem Förderband gewährleistet ist. Die Oberfläche des Förderbandes ist nach der erfindungsgemäßen Reinigungsvorrichtung im Wesentlichen vollständig gesäubert, um anschließend eine hygienische erneute Bereitstellung von Feuchtfutter für das Geflügel zu ermöglichen. Als Reinigungseinrichtung speziell für die Entfernung von Feuchtfutterresten kann dabei jedes dem Fachmann des Gebiets hierfür bekannte Mittel eingesetzt werden. Beispiel hierfür sind Bürstenwalten, oszillierende Bürsten, Hochdruck-Wasserdüsen oder auch Waschbäder. Die Reinigungsvorrichtung kann nach der Erfindung insbesondere auch eine lebensmittelechte Desinfektion umfassen.

Nach einer vorteilhaften Ausgestaltung der erfindungsgemäßen Futteranlage weist die Reinigungsvorrichtung eine Einrichtung mit mindestens einer Bürste auf. Die mindestens eine Bürste der Reinigungsvorrichtung ist dabei so an dem Förderband der Fördereinrichtung angebracht, dass eine weitestgehende Entfernung von

Restbestandteilen des feuchten Futters gewährleistet wird. Vorzugsweise ist die Bürste der Reinigungsvorrichtung eine über die gesamte Breite des Förderbandes vorgesehene wlzenartige Bürste, deren Drehachse quer zur Längsrichtung des Förderbandes verläuft. Die Form der Bürste entspricht vorteilhafterweise der Querschnittsform des Bandes an der Position der Reinigungsvorrichtung. Die Form und die Art des Materials der Bürste sind dabei so ausgewählt, dass eine Entfernung von feuchtem Restfutter von der Oberfläche des Förderbandes gewährleistet ist. Insbesondere kann eine Bürste mit Borsten aus einem Kunststoffmaterial mit einer vordefinierten Härte verwendet werden. Bei einer Mehrzahl von Bürsten, die vorzugsweise hintereinander angeordnet sind, können die Bürsten nach der Erfindung gleichsinnig oder in entgegengesetzter Drehrichtung betrieben werden, was weiter den erreichbaren Reinigungsgrad der Futteranlage erhöht, insbesondere wenn die Oberfläche des Förderbandes nicht (mehr) ganz glatt ist.

Nach einer weiteren vorteilhaften Ausgestaltung der Erfindung weist die Reinigungsvorrichtung eine Bandwascheinrichtung mit mindestens einer Hochdruckdüse auf. Beispielsweise kann eine Wasserhochdruckdüse oder eine Reihe von mehreren Wasserhochdruckdüsen als eine Bandwascheinrichtung vorgesehen werden. Durch das Besprühen der Oberfläche des Förderbandes mit Wasser unter hohem Druck wird eine noch gründlichere Reinigung des Förderbandes nach dem Futterabschnitt erreicht. Das Förderband ist anschließend vollständig sauber und hygienisch für eine erneute Beförderung von zugeführtem feuchtem Futter, wie zum Beispiel fermentiertem Feuchtfutter.

Nach einer weiteren vorteilhaften Ausgestaltung der Erfindung kann auch eine Kombination von mindestens einer Bürste und mindestens einer Reihe von Hochdruckdüsen als Reinigungsvorrichtung hintereinander vorgesehen werden.

Nach einer weiteren vorteilhaften Ausgestaltung der erfindungsgemäßen Futteranlage ist die Reinigungsvorrichtung in einem Rückführabschnitt an einer Unterseite des Förderbandes, d. h. unterhalb des eigentlichen Fütterungsabschnittes, angeordnet. Dies hat den Vorteil, dass von dem Band entfernte Futterreste und/oder Schmutzpartikel automatisch durch die Schwerkraft nach unten wegfallen und keine zusätzlichen Einrichtungen zum Entfernen der Restbestandteile des Feuchtfutters unbedingt benötigt werden. Außerdem befindet sich damit die Reinigungsvorrichtung vorzugsweise außerhalb des Stallbereichs oder des von den Geflügeltieren eingenommenen Freilandbereichs, so dass auch eine erneute Verschmutzung durch Verunreinigungen seitens der Geflügeltiere, sei es durch Kot oder durch andere Schmutzpartikel, hierdurch vermieden wird. Nach einer diesbezüglichen Alternative kann die Futteranlage mit einer Einrichtung zum Abtransport von Resten des Futters versehen sein.

Nach einer weiteren vorteilhaften Ausgestaltung der Erfindung weist das Förderband der Futteranlage mindestens im Bereich der Fütterung, d. h. im Fütterungsabschnitt, eine obere Abdeckung mit seitlichen Öffnungen auf. Die obere Abdeckung verhindert zum einen, dass die Geflügeltiere zum Einnehmen des Futters auf das Förderband aufsteigen und hierdurch die geordnete Fütterung stören oder dadurch Schmutzpartikel in den Fütterungsabschnitt einbringen. Zum anderen gewährleistet die obere Abdeckung auch einen Schutz, wenn das Förderband beispielsweise in einer Freilandhaltung von Geflügeltieren verwendet wird. Nicht zuletzt bietet die obere Abdeckung mit seitlichen Öffnungen den wesentlichen Vorteil, dass, wenn die seitlichen Öffnungen auf die jeweilige Geflügelart (Größe, Breite, Höhe etc.) angepasst sind, eine effiziente Verfütterung des feuchten Futters ermöglicht wird, ohne dass es zu einer ungerechten Verteilung des Futters kommt. Zusammen mit dem relativ schnell laufenden Förderband und den auf die Größe der Tiere angepassten Öffnungen wird im Wesentlichen eine gleichzeitige Fütterung sämtlicher Tiere auch bei einer hohen Anzahl von Tieren, beispielsweise mehreren tausend Geflügeltieren, gewährleistet.

Die seitlichen Öffnungen und/oder die Höhe der Abdeckung und/oder die Höhe des Fütterungsabschnittes des Förderbandes im Verhältnis zu einem Stallboden oder einem Freilandboden sind vorzugsweise abgestimmt auf die jeweilige Geflügelart oder einstellbar nach einem weiteren vorteilhaften Aspekt der Erfindung. Wenn beispielsweise kleinere Geflügeltiere gefüttert werden, wird die Höhe entsprechend so eingestellt oder ausgewählt, dass eine optimale Futteraufnahme seitens des Geflügels gewährleistet ist, d. h. das Geflügel mit dem Kopf in die Öffnung hineingelangen kann und einen ausreichenden Breitenbereich des Förderbandes, beispielsweise bis fast zur Mitte hin, erreichen kann, um das dort relativ schnell vorbeiziehende Feuchtfutter oder die Mischung aus Trocken- und Feuchtfutter gut aufnehmen zu können. Die Futteranlage nach der Erfindung kann alternativ auch ohne eine solche Abdeckung realisiert werden, insbesondere bei relativ schmalen Förderbändern, d.h. relativ geringer Bandbreite. Nach einer weiteren Alternative kann statt einer Abdeckung auch eine Sitzstange über dem Fütterungsabschnitt des Förderbandes vorgesehen sein, welche es ausschließt, dass die Geflügeltiere das Förderband selbst als solche nutzen und dann auf das Futter koten.

Nach einer weiteren vorteilhaften Ausgestaltung der Erfindung sind mehrere Förderbänder in einer Futteranlage vorgesehen, welche in einer Reihenschaltung zueinander angeordnet sind und betrieben werden können. Hierdurch wird die Anzahl von Geflügeltieren, die mit der Futteranlage mit Futter versorgt werden können, weiter erhöht, und es können beispielsweise auch bis zu einigen hundert oder gar bis zu einigen tausend Geflügeltiere gleichzeitig mit feuchtem Futter oder eine Feucht- /Trocken-Futtermischung effektiv gefüttert werden.

Nach einer weiteren vorteilhaften Ausgestaltung der Erfindung ist mindestens ein Vorratsbehälter für ein fermentiertes Feuchtfutter vorgesehen, und der Vorratsbehälter ist zu einem schnellen Transportieren und Bereitstellen des fermentierten Feuchtfutters mittels eines Zuführförderbandes oder ähnlichem mit dem Zuführabschnitt verbunden. Der mindestens eine Vorratsbehälter kann auch ein Fermentationstank sein, in welchem die Herstellung des feuchten, fermentierten Futters direkt erfolgt. Alternativ kann der Vorratsbehälter auch ein Vorratsbehälter sein, in welchen das fermentierte Feuchtfutter aus dafür vorgesehenen separaten Spezialtanks beispielsweise über Zuführleitungen, Förderschnecken oder ähnliches zugeführt wird. Die erfindungsgemäße Kopplung der schnell laufenden Förderbänder mit mindestens einem Vorratsbehälter für Feuchtfutter erlaubt insbesondere eine vollautomatische und schnell ablaufende Bereitstellung des Feuchtfutters, so dass hierdurch die Hygiene und die Qualität des bereitgestellten Futters gewährleistet werden. Nach der Erfindung kann auch eine Kombination von einem Vorratsbehälter für Feuchtfutter und einem Vorratsbehälter für Trockenfutter vorgesehen sein, die eine bedarfsgerechte Mischung der Futterarten erlaubt.

Nach einer weiteren vorteilhaften Ausgestaltung der Erfindung weist das Förderband mindestens in einem Fütterungsabschnitt einen leicht ovalen oder gebogenen rinnenförmigen Querschnitt auf. Hierdurch wird ein Herunterfallen von zu viel Futter von dem Förderband vermieden. Die Rinnenform gewährleistet, dass das vollständig zugeführte Feuchtfutter auch über eine längere Strecke auf dem Förderband verbleibt, selbst wenn die Geflügeltiere durch das Picken und Schaben bei der Futteraufnahme auf die Lage des Futters auf dem Förderband einwirken.

Nach einer weiteren vorteilhaften Ausgestaltung der Erfindung ist im Zuführabschnitt der Futteranlage eine Verteileinrichtung vorgesehen, welche ausgebildet ist, um insbesondere fermentiertes Feuchtfutter über eine relativ große Fläche auf dem Förderband zu verteilen. Hierdurch wird die schnelle Bereitstellung von einer großen Menge von Feuchtfutter auf dem Förderband erreicht. Im Vergleich zu einer relativ punktuellen Einbringung von Futter beispielsweise über ein Zuführrohr, eine Zuführklappe etc. erreicht die Verteileinrichtung, dass gleichzeitig über einen größeren Breiten- und Längenabschnitt Futter auf das Förderband verteilt werden kann. Das Förderband kann damit mit einer noch höheren Geschwindigkeit betrieben werden, da die Futterzufuhr über einen größeren Abschnitt erfolgt. Die Förderbänder der Futteranlage nach der Erfindung können damit auch länger ausgebildet werden, so dass mit ein und demselben Förderband eine größere Anzahl von Geflügeltieren gleichzeitig gefüttert werden kann.

Nach der Erfindung wird auch ein Verfahren zur Bereitstellung von Geflügelfutter, insbesondere von fermentiertem Feuchtfutter, für eine Mehrzahl von Geflügeltieren in einer Freiland- oder Stallhaltung bereitgestellt, wobei über mindestens eine Fördereinrichtung in Form mindestens eines schnell laufenden Förderbandes das Futter dem Geflügel mindestens abschnittsweise in einem Fütterungsabschnitt zugänglich gemacht wird und wobei das Verfahren gekennzeichnet ist durch die Schritte:
a) Manuelles oder automatisches Zuführen von fermentiertem Feuchtfutter aus mindestens einem Vorratsbehälter auf das schnell laufende Förderband;
b) Befördern des Feuchtfutters entlang dem Fütterungsabschnitt mit einer vordefinierten, vergleichsweise hohen Geschwindigkeit; und
c) Reinigen des mindestens einen Förderbandes in einem Abschnitt nach dem Fütterungsabschnitt bezogen auf die Förderrichtung des Förderbandes.

Nach der Erfindung wird zunächst ein Feuchtfutter für Geflügel, insbesondere ein fermentiertes Feuchtfutter, aus mindestens einem Vorratsbehälter bereitgestellt. Der Vorratsbehälter kann ein Vorratstank oder ein Fermentationstank selbst sein. Die Bereitstellung des Feuchtfutters aus dem Vorratsbehälter erfolgt entweder durch manuelles Zuführen oder durch automatisches Zuführen des Futters auf ein schnell laufendes Förderband. Nach Schritt b) wird das Feuchtfutter mittels des Förderbandes sodann entlang einem Fütterungsabschnitt mit einer vordefinierten, vergleichsweise hohen Geschwindigkeit befördert. Eine vergleichweise hohe Geschwindigkeit nach der Erfindung kann insbesondere eine Bandgeschwindigkeit in der Größenordnung von 1,2 m/s bis 2,0 m/s, vorteilhafterweise in der Größenordnung von 1,5m/s sein. In einem anschließenden Schritt c) wird das mindestens eine Förderband gereinigt. Die Reinigung des Förderbandes erfolgt mittels einer Reinigungsvorrichtung oder mittels mehrerer Reinigungsvorrichtungen, die in Förderrichtung nach einem Fütterungsabschnitt des Förderbandes vorgesehen ist bzw. sind. Als Reinigungsvorrichtung kann insbesondere eine Reinigungsvorrichtung mit einer Bürste, einer Wasserhochdruckdüse oder ähnlichem verwendet werden. Damit ist durch die Erfindung ein schnelles und effektives Ausbringen des Feuchtfutters entlang dem Fütterungsabschnitt gewährleistet, so dass auch eine große Anzahl von Geflügeltieren im Wesentlichen gleichzeitig mit dem Feuchtfutter versorgt wird und nicht die als erstes an dem Zuführabschnitt sich befindenden Geflügeltiere eine größere Menge zu sich nehmen können als weiter entfernt an dem Förderband stehende Geflügeltiere. Durch die erfindungsgemäße Reinigung des Förderbandes nach dem Fütterungsabschnitt wird gewährleistet, dass sämtliche Restbestandteile des Feuchtfutters und jegliche Verschmutzungen entfernt werden, so dass das Förderband für ein anschließendes Wiederbeladen eine ausreichende Sauberkeit aufweist, um eine Verschlechterung der Qualität oder eine Entstehung von Schimmel oder ähnliches effektiv zu verhindern. Damit kann erfindungsgemäß zum ersten Mal auch für die Geflügelfütterung beispielsweise ein fermentiertes Feuchtfutter eingesetzt werden, das hinsichtlich der Verträglichkeit, der Verdaulichkeit und der Herstellungskosten Vorteile gegenüber herkömmlichem Trockenfutter, wie zum Beispiel gepressten Pellets aus Getreidemischungen, aufweist. Mit der Erfindung kann aber auch eine gezielte Mischung von fermentiertem Feuchtfutter und Trockenfutter mit oder ohne weiteren Zusatzstoffen, wie Vitamine oder Mineralien, auf effektive Art und Weise bereitgestellt und verfüttert werden.

Nach einer vorteilhaften Ausgestaltung des erfindungsgemäßen Verfahrens wird die Reinigung des Förderbandes in Schritt c) mit mindestens einer Bürste und/oder mindestens einer Wasserhochdruckdüse durchgeführt. Die Bürste, welche beispielsweise eine rotierende Walze mit Borsten aus hartem Kunststoff sein kann, hat den Vorteil, dass sämtliche an der Bandoberfläche haftenden Futterbestandteile weitestgehend entfernt werden. Die Reinigung mittels einer Wasserhochdruckdüse hat den zusätzlichen Vorteil, dass hierdurch ein noch höherer Reinigungsgrad erreicht wird, da das Band regelrecht gewaschen wird. Selbstverständlich kann nach der Erfindung auch eine Kombination einer Bürste oder einer Reihe von Bürsten mit Wasserhochdruckdüsen zur Reinigung verwendet werden. Alternativ oder zusätzlich kann beispielsweise durch die Reinigungsdüsen auch eine Lebensmittelechte Desinfektion durchgeführt werden, was den Grad an Hygiene noch weiter verbessert.

Nach einer weiteren vorteilhaften Ausgestaltung des erfindungsgemäßen Verfahrens wird die Geschwindigkeit des mindestens einen schnell laufenden Förderbandes in Abhängigkeit von der Art des Geflügels und/oder der Länge des Förderbandes derart eingestellt, dass eine im Wesentlichen gleichmäßig verteilte Futteraufnahme entlang dem gesamten Fütterungsabschnitt des Förderbandes durch alle Tiere gewährleistet wird. Mit dieser Maßnahme wird gewährleistet, dass fast alle Tiere in beispielsweise einem Stall im Wesentlichen zur gleichen Zeit ihr Futter bekommen. Es wird hierdurch verhindert, dass die Geflügeltiere am Anfang der Bänder deutlich mehr Futter aufnehmen als diejenigen am Ende des Förderbandes. Die Geschwindigkeit des Förderbandes ist dabei so hoch, dass auch noch am Ende der Förderbänder ausreichend Feuchtfutter auf dem Band verbleibt, da es den davorstehenden Geflügeltieren nicht gelingt, das Futter vollständig von dem Förderband aufzupicken. Gleiches gilt für den Fall, dass mehrere Förderbänder hintereinander in einer Art Reihenschaltung betrieben werden. Die Bandgeschwindigkeit kann zum Beispiel in etwa 1,5m/s betragen. In diesem Fall schalten sich nach dem ersten Umlauf alle Förderbänder der Futteranlage erstmal ab, damit ein Rückstau von Futter vermieden wird. Ein Abschalten und wieder Anschalten der Förderbänder kann nach der Erfindung mittel einem Taktgeber oder einer Zeitschaltuhr oder aber auch durch Sensoren erfolgen, welche den Beladungsgrad oder den Feuchtigkeitsgehalt auf der Bandoberfläche messen.

Nach einer weiteren vorteilhaften Ausgestaltung des erfindungsgemäßen Verfahrens erfolgt in Schritt a) eine relativ großflächige Verteilung des zugeführten fermentierten Feuchtfutters auf dem Förderband, insbesondere mittels einer Verteileinrichtung. Das Feuchtfutter aus dem Vorratsbehälter wird somit nicht im Wesentlichen punktuell auf eine Stelle auf dem Förderband aufgetragen, sondern eine Verteileinrichtung sorgt dafür, dass das Futter schon beim Beladen über einen relativ großflächigen Bereich (in der Breite und/oder der Länge) in einem Zuführabschnitt des Förderbandes aufgebracht wird. Damit wird gewährleistet, dass die schnelle Verteilung von Feuchtfutter an eine Vielzahl von Geflügeltieren möglich ist. Zudem wird damit erreicht, dass das häufig zu einem Verklumpen neigende Feuchtfutter in einer relativ gleichmäßigen Lage und Menge auf der gesamten Breite des Förderbandes verteilt wird. Eine erfindungsgemäße Verteileinrichtung kann beispielsweise in Form eines Gitters oder ähnlichem realisiert sein. Diese verhindert auch ein ungewünschtes Verklumpen im Falle von dazu anfälligem Feuchtfutter.

Nach einer weiteren vorteilhaften Ausgestaltung des erfindungsgemäßen Verfahrens sind mehrere in Reihe geschaltete Förderbänder vorgesehen und wird das in Förderrichtung letzte Förderband zuerst eingeschaltet und werden sukzessive sodann die anderen Förderbänder in einer Reihenfolge entgegen der Förderrichtung eingeschaltet. Mit mehreren in Reihenschaltung zueinander angeordneten schnell laufenden Förderbändern gemäß der Erfindung kann eine größere Anzahl von Geflügeltieren beispielsweise eines ganzen Stalls mit dem Feuchtfutter versorgt werden. Dadurch, dass das letzte Förderband der Reihenschaltung als erstes eingeschaltet wird und anschließend nach und nach die anderen schnell laufenden Förderbänder in rückwärtiger Richtung zu der Förderrichtung eingeschaltet werden, wird verhindert, dass ein Futterstau oder eine unerwünschte Anhäufung von Feuchtfutter an einem Ende eines Bandes entsteht, wenn das nachfolgende Band noch nicht läuft. Die Reihenschaltung der Förderbänder gemäß der Erfindung ist dabei vorteilhafterweise so, dass das Feuchtfutter auf ein erstes Förderband automatisch oder manuell zugeführt wird und am Ende des ersten Förderbandes eine Übergabe auf das nachfolgende Förderband usw. erfolgt. Hierzu sind an den Enden der Förderbänder entsprechende Übergabeeinrichtungen vorgesehen, oder die Förderbänder sind derart zueinander angeordnet, dass die Übergabe automatisch durch ein Herunterfallen von dem Ende des vorherigen Förderbandes auf das nachfolgende Förderband geschieht. Auch bei dieser Ausgestaltung der Erfindung können vorzugsweise die Förderbänder periodisch ab- und angeschaltet werden, um einen unerwünschten Rückstau von Restfutter zu vermeiden. Nach einem ersten Umlauf oder einer ersten Beladung sämtlicher Förderbänder mit Futter werden vorzugsweise erstmal alle Bänder abgeschaltet. Wenn dann das Futter weitestgehend aufgenommen wurde, kann ein neuer Beladungszyklus mit einer dazwischen liegenden Reinigung erfolgen.

Die Erfindung wird im Nachfolgenden mehr im Detail anhand von mehreren Ausführungsbeispielen unter Bezugnahme auf die beigefügten Zeichnungen beschrieben werden. In den Zeichnungen zeigen:
- Fig. 1a: eine Seitenansicht eines ersten Ausführungsbeispiels einer erfindungsgemäßen Futteranlage;
- Fig. 1b: eine Querschnittsansicht gemäß A-A aus der Fig. 1a;
- Fig. 2a: eine Seitenansicht eines zweiten Ausführungsbeispiels einer erfindungsgemäßen Futteranlage;
- Fig. 2b: eine Querschnittsansicht gemäß A-A aus der Fig. 2a;
- Fig. 3a: eine Seitenansicht eines dritten Ausführungsbeispiels einer erfindungsgemäßen Futteranlage;
- Fig. 3b: eine Querschnittsansicht gemäß A-A aus der Fig. 3a;
- Fig. 3c: eine Querschnittsansicht gemäß B-B aus der Fig. 3a;
- Fig. 4: eine schematische Ansicht eines vierten Ausführungsbeispiels einer erfindungsgemäßen Futteranlage mit Vorratsbehältern;
- Fig. 5: eine schematische Ansicht eines fünften Ausführungsbeispiels einer erfindungsgemäßen Futteranlage mit mehreren Förderbändern in Reihenschaltung;
- Fig. 6: eine schematische ausschnittweise Seitenansicht eines sechsten Ausführungsbeispiels einer erfindungsgemäßen Futteranlage;
- Fig. 6a: eine Querschnittsansicht gemäß A-A aus der Fig. 6; und
- Fig. 6b: eine Querschnittsansicht gemäß B-B aus der Fig. 6b.

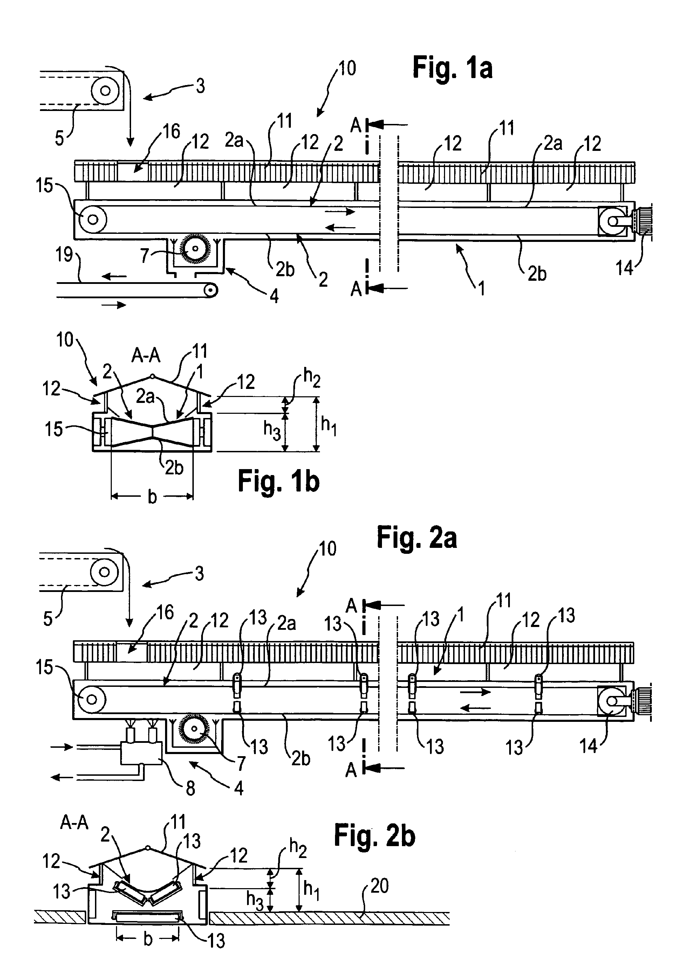

In den Fig. 1a und 1b ist in einer Seitenansicht und in einer Querschnittsansicht ein erstes Ausführungsbeispiel einer erfindungsgemäßen Futteranlage dargestellt. Die Futteranlage 10 weist bei diesem Ausführungsbeispiel ein schnell laufendes Förderband 2 auf, welches in einem Futterzuführabschnitt 3 über ein Zuführförderband 5 mit Feuchtfutter für Geflügel beladen wird (vgl. Pfeil in Fig. 1a). Das Förderband 2 ist an einem Ende mit einer Antriebseinheit 14 versehen, welche beispielsweise ein in der Geschwindigkeit regelbarer Elektromotor ist. Am gegenüberliegenden Ende des Förderbandes 2 ist eine Umlenkrolle 15 vorgesehen, so dass das Band an seiner Oberseite einen Fütterungsabschnitt 2a und an seiner Unterseite einen Rückführabschnitt 2b bildet. Im Rückführabschnitt 2b des Förderbandes 2 ist bei diesem Ausführungsbeispiel eine Reinigungsvorrichtung 4 in Form einer rotierenden Bürste 7 angeordnet. Die Bürste 7 dient einem Entfernen von feuchtem Restfutter und Schmutzpartikeln auf der Oberfläche des Förderbandes 2, welche vorteilhafterweise bei diesem Ausführungsbeispiel nach unten wegfallen und über eine Öffnung eines Gehäuses der Reinigungsvorrichtung 4 auf ein Reinigungsförderband 19 fallen und abtransportiert werden.

Über im Wesentlichen die gesamte Länge des Förderbandes 2 ist eine obere Abdeckung 11 vorgesehen, die zum einen das Förderband vor Kot und ähnlichem schützt und zum anderen für das Geflügel vordefinierte Öffnungen im Fütterungsabschnitt 2a des Förderbandes 2 bereitstellt. Die Öffnungen 12 zwischen der Oberfläche des Förderbandes 2 und der Abdeckung 11 sind dabei so bemessen, dass die Geflügeltiere, welche mit der Futteranlage zu füttern sind, das Futter gut erreichen können durch ein Hineinpicken, jedoch nicht auf das Förderband 2 steigen können, so dass eine geordnete Verfütterung des Feuchtfutters gewährleistet ist. Im Zuführabschnitt 3 des Förderbandes 2, an welchem durch das Zuführförderband 5 das beispielsweise fermentierte Feuchtfutter zugeführt wird, ist eine Durchlassöffnung 16 in der dachartigen Abdeckung 11 vorgesehen. Die Abdeckung 11 ist bei diesem Ausführungsbeispiel (vgl. Fig. 1b)) als ein giebelförmiges Dach realisiert, an dessen Spitze eine Art Sitzstange für das Geflügel vorhanden ist. Das Förderband 2 weist bei diesem Ausführungsbeispiel nach den Fig. 1a und 1b eine leicht gebogene, rinnenartige Form auf. Hierzu sind die Umlenkrolle 15 und die Antriebsrolle der Antriebseinheit 14 mit einer entsprechend gebogenen Form ausgestaltet, so dass das zwischen ihnen gespannte Förderband 2 die gebogene Form einnimmt (vgl. Fig. 1b). Das Förderband 2 ist nach der Erfindung ein relativ schnell laufendes Förderband und wird beispielsweise mit einer Geschwindigkeit von 1,2 m/s bis 2,0 m/s, vorzugsweise mit 1,5 m/s durch die Antriebseinheit 14 angetrieben. Die Antriebsgeschwindigkeit kann auch variabel einstellbar sein, um beispielsweise auf unterschiedliche Anzahlen von zu fütternden Tieren reagieren zu können.

Vorteilhafterweise ist nach der Erfindung die Geschwindigkeit variabel einstellbar, so dass bei einer unterschiedlichen Anzahl von zu fütternden Geflügeltieren oder bei unterschiedlichen Arten von Geflügel die Geschwindigkeit entsprechend über ein Steuergerät angepasst werden kann. Die Futteranlage 10 nach diesem Ausführungsbeispiel ist für das Geflügel von beiden Seiten durch die Öffnungen 12 zwischen der Abdeckung 11 und dem Gehäuse des Förderbandes 2 zugänglich, so dass hiermit eine relativ große Anzahl von Geflügeltieren gleichzeitig von beiden Seiten gefüttert werden kann. Die Breite b des Förderbandes 2, die Höhe h₁ der Abdeckung 11, die Höhe h₂ der Öffnungen 12 und die Höhe h₃ des Förderbandes 2 sind dabei nach einer vorteilhaften Ausgestaltung der Erfindung so bemessen, dass für die entsprechende Geflügelart eine optimale Bereitstellung des Feuchtfutters in dem Fütterungsabschnitt 2a gewährleistet ist. Nach einem vorteilhaften Aspekt der Erfindung kann die Höhe h₃ des Förderbandes auch variabel eingestellt werden, beispielsweise indem das gesamte Förderband in der Höhe verstellt wird. Nach einer Ausgestaltung der Erfindung ist die Breite b der Förderbänder variabel zwischen etwa 10 cm für die Fütterung von Hühnervögeln und bis zu etwa 70 cm für Gänse oder ähnliches Geflügel. Die Höhe h₃ des Förderbandes 2 kann je nach Geflügelart zwischen etwa 1 cm für Hühnerküken und bis zu etwa 40 cm für Mastgänse oder Puten betragen.

Die Fig. 2a und 2b zeigen in einer Seitenansicht und in einer Querschnittsansicht ein zweites Ausführungsbeispiel einer erfindungsgemäßen Futteranlage 10, wobei im Folgenden lediglich die Unterschiede zu dem oben beschriebenen ersten Ausführungsbeispiel erläutert werden. Andere Merkmale, Elemente und Vorteile der Futteranlage 10, wie sie zu den Fig. 1a und 1b beschrieben wurden, können entsprechend auf das zweite und die weiteren Ausführungsbeispiele angewendet werden, ohne dass dies ausdrücklich nochmals wiederholt wird. Nach dem zweiten Ausführungsbeispiel der Futteranlage 10 sind als Reinigungsvorrichtung 4 eine Reinigungsbürste 7 und dahinterliegend zusätzlich eine Reihe von Wasserhochdruckdüsen 8 vorgesehen, die nach dem Bürsten des Bandes an der Unterseite des Förderbandes 2 eine Art zweite Stufe der Reinigung mit Wasser unter hohem Druck ermöglichen. Mit dieser Reinigungsvorrichtung 4 wird ein noch höherer Reinigungsgrad erreicht. Sämtliche Schmutzbestandteile oder für Feuchtfutter schädliche Reste, beispielsweise auch von schon verdorbenem Futter, werden so effektiv von der Oberfläche des Förderbandes 2 entfernt, so dass in dem Zuführabschnitt 3 wieder ein völlig sauberes Förderband 2 bereitsteht, um mit neuem Futter, beispielsweise fermentiertem Feuchtfutter, aus einem Vorratsbehälter (nicht dargestellt) beladen zu werden. Auch bei diesem Ausführungsbeispiel, wie es insbesondere die Fig. 2b zeigt, ist das Förderband 2 in einem Fütterungsabschnitt 2a mit einer leicht gebogenen, rinnenartigen Form vorgesehen. Dies wird hier über eine Reihe von Umlenkrollen 13 gewährleistet, die entlang der Längserstreckung des Förderbandes 2 vorhanden sind. An der Unterseite, d. h. dem Rückführabschnitt 2b, des Förderbandes 2 ist das Förderband 2 in einer geraden Form geführt, die ebenso durch entsprechende Umlenkrollen 13 hergestellt wird. Auf diese Weise ist das Förderband 2 im Rückführabschnitt 2b gerade und somit optimal für eine Reinigung mit der Reinigungsvorrichtung 4, beispielsweise, über entsprechend geformte einfache Bürsten 7 und Wasserhochdruckdüsen 8. Das Material des Förderbandes 2 ist vorzugsweise ein flexibles, jedoch gegen ein Picken widerstandsfähiges Material, beispielsweise ein Kunststoffmaterial oder ein Hartgummi mit oder ohne Verstärkungen (z. B. Faserverstärkungen) im Inneren des Materials. Dem Fachmann des Gebiets sind hierfür geeignete Materialien und Formen von derartigen Förderbändern bekannt. Vorteilhafterweise werden handelsübliche Materialien für Förderbänder, wie zum Beispiel Kunststoffe oder Hartgummi verwendet. Auch eine Kombination von Metall und Kunststoff kann für die erfindungsgemäße Futteranlage und deren Förderbänder eingesetzt werden, da diese eine hohe Widerstandsfähigkeit gegenüber ein Picken durch die Schnäbel aufweist und eine wirksame Reinigung zu Hygienezwecken erlaubt. Insbesondere an der äußeren Oberfläche ist das Material des Förderbandes hierzu möglichst glatt ausgebildet, damit kein unerwünschten Futterreste nach dem Reinigen verbleiben.

Auch bei diesem Ausführungsbeispiel nach den Fig. 2a und 2b ist eine Abdeckung 11 in Form eines Spitzgiebels mit Sitzstange vorgesehen. Die Abdeckung 11 ist derart an dem Gehäuse des Förderbandes 2 montiert, dass relativ großflächige seitliche Öffnungen 12 für das Geflügel entstehen, ohne dass die Geflügeltiere auf das Band aufsteigen können oder eine Verschmutzung von oben des Futters in dem Fütterungsabschnitt 2a möglich ist. Die Abdeckung 11 ist über Haltestäbe an dem Gehäuse des Förderbandes montiert. Auch bei diesem Ausführungsbeispiel sind dafür die Breite b des Förderbandes, die Höhe h₁ der Abdeckung 11, die Höhe h₂ der Öffnungen 12 und die Höhe h₃ der Öffnungen 12 entsprechend den Geflügeltieren angepasst. Beispielsweise ist für Zwerghühner eine niedrigere Höhe eingestellt, als es für Gänse oder andere größere Geflügeltiere der Fall ist. Damit kann auch die relative Höhe des Fütterungsabschnittes 2a bezogen auf einen Stallboden 20 variiert werden, wobei die Reinigungsvorrichtung 4 vorzugsweise unterhalb des Stallbodens 20 in einem für die Geflügeltiere nicht zugänglichen Bereich angeordnet ist, so dass ein hoher Reinigungsgrad und eine hohe Hygiene bei der Befütterung mit der Futteranlage 10 gewährleistet sind.

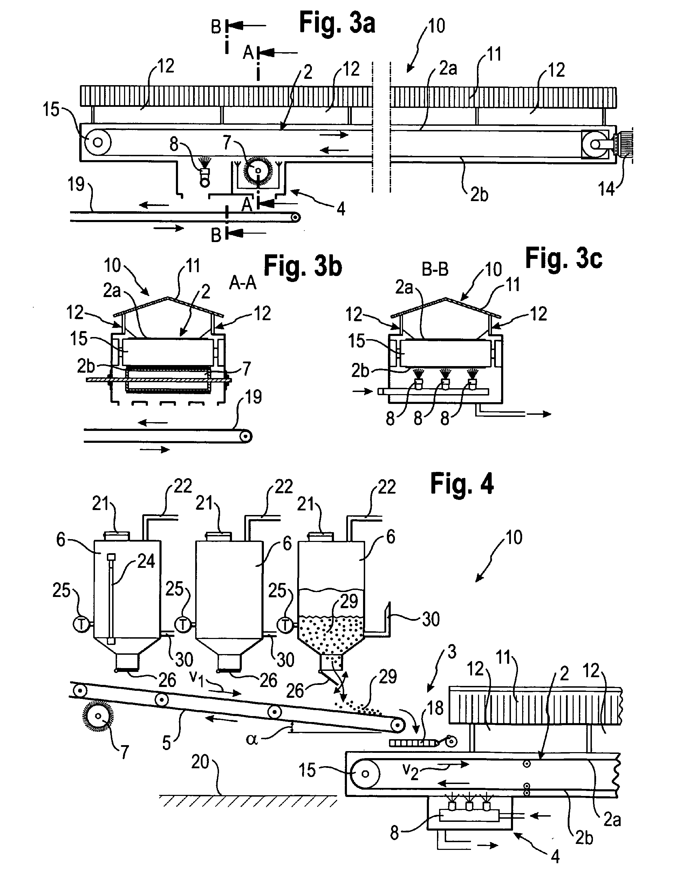

In den Fig. 3a, 3b und 3c ist ein weiteres, drittes Ausführungsbeispiel einer erfindungsgemäßen Futteranlage 10 dargestellt, wobei wie bei den vorherigen Ausführungsbeispielen entsprechende Elemente, Vorteile und Merkmale entsprechend übertragbar sind, ohne dass dies hier noch einmal explizit wiederholt werden muss. Die dritte Ausführungsform der Futteranlage 10 weist ein Förderband 2 mit einer im Querschnitt geradlinigen Oberfläche sowohl im Fütterungsabschnitt 2a als auch im Rückführabschnitt 2b auf. Auch hier handelt es sich bei dem Förderband 2 um ein relativ schnell laufendes Förderband, d. h. ein Förderband, das mit einer Geschwindigkeit von etwa 1,2 m/s bis 2,0 m/s, insbesondere mit 1,5 m/s, betrieben wird. Zum Antrieb ist auch hier eine Antriebseinheit 14 an einem Ende des Förderbandes 2 angeordnet. Am gegenüberliegenden Ende ist eine Umlenkrolle 15 vorhanden. Selbstverständlich kann die Antriebseinheit 14 auch an einer anderen Position an dem Förderband 2 vorgesehen werden. Im untenliegenden Rückführabschnitt 2b des Förderbandes 2 ist bei diesem Ausführungsbeispiel eine zweistufige Reinigungsvorrichtung 4 vorgesehen. In einer ersten Stufe wird mit einer rotierenden, walzenartigen Bürste 7 die Oberfläche des Förderbandes 2 von Restbestandteilen des Futters und Schmutzpartikeln zunächst durch Bürsten gereinigt. In einer dahinterliegenden zweiten Stufe der Reinigungsvorrichtung 4 wird die Oberfläche des Förderbandes 2 über eine Reihe von Wasserhochdruckdüsen 8, bei diesem Ausführungsbeispiel drei nebeneinanderliegende Wasserhochdruckdüsen 8, weiter gereinigt. Die beim Reinigen und Waschen abfallenden Restpartikel und das Reinigungswasser werden aus der Reinigungsvorrichtung 4 durch untere Auslassöffnungen abgeführt, wobei bei diesem Ausführungsbeispiel ein Reinigungsförderband 19 vorhanden ist, das die Schmutzpartikel und Restbestandteile aus dem Bereich des Stalls entfernt (vgl. Fig. 3a und 3b).

Die Fig. 4 zeigt wiederum in einer schematischen Ansicht ein viertes Ausführungsbeispiel einer erfindungsgemäßen Futteranlage 10 mit mehreren Vorratsbehältern 6 zur Bereitstellung eines fermentierten Feuchtfutters und gegebenenfalls zusätzlich Trockenfutter. Das relativ schnell laufende Förderband 2, welches eine ähnliche Struktur und einen ähnlichen Aufbau aufweist wie bei den vorherigen Ausführungsbeispielen, wird durch ein Zuführförderband 5 mit insbesondere Feuchtfutter beladen. Das Zuführförderband 5 ist in einem Neigungswinkel α im Verhältnis zur Horizontalen schräg über dem Förderband 2 positioniert, so dass das fermentierte Feuchtfutter 29 aus den Vorratsbehältern 6 schnell auf das Förderband 2 transportiert werden kann. Im Zuführabschnitt 3 ist eine Verteileinrichtung 18 vorgesehen. Die Verteileinrichtung 18 dient einem großflächigeren Verteilen des Feuchtfutters 29 auf dem Förderband 2, damit beim schnellen Beladen und schnellen Verfüttern des Futters eine ausreichend große Menge von Feuchtfutter 29 auf den Fütterungsabschnitt 2a des Förderbandes 2 gebracht werden kann. Die Verteileinrichtung 18 ist bei diesem Ausführungsbeispiel als eine Art Rüttelgitter mit einem gitterförmigen Element und einer Rütteleinrichtung ausgestaltet. Die Verteileinrichtung 18 kann jedoch auch eine andere Form als die eines Rüttelgitters aufweisen. Die Bereitstellung und Herstellung des fermentierten Feuchtfutters 29 geschieht auf folgende Art und Weise. Die Vorratsbehälter 6 sind bei diesem Ausführungsbeispiel nach der Fig. 4 als sogenannte Fermentationstanks ausgestaltet. Die Vorratsbehälter 6 sind hierfür luftdicht verschließbar. An der Oberseite weisen die Vorratsbehälter 6 eine Nachfüllöffnung 21 auf, über welche die Futterrohstoffe in die Vorratsbehälter 6 eingefüllt werden. Daneben kann auch noch ein Vorratsbehälter für Trockenfutter vorgesehen werden (nicht gezeigt), so dass dann eine bedarfsgerechte Mischung von Feuchtfutter und Trockenfutter erfolgen kann. Die Futterrationen können so auch hinsichtlich der Kosten optimiert werden, da der Anteil von kostengünstigerem Feuchtfutter relativ hoch sein kann, wenn dieses fermentiert ist und damit besser verdaulich für die Tiere ist.

Als Rohstoffe für die Herstellung eines beispielsweise fermentierten Feuchtfutters 29 können insbesondere die folgenden Stoffe oder Kombinationen davon dienen: Weizen, Gerste, Roggen, Hirse, Triticale, Raps, Rapskuchen (aus der Ölproduktion), Sonnenblumen, Sonnenblumenkuchen (aus der Ölproduktion), Soja , Bohnen und Palmkuchen. Als Nebenstoffe für die Herstellung des fermentierten Feuchtfutters 29 für Geflügel nach der Erfindung können folgende Stoffe eingesetzt werden: Molke, Milchprodukte, Kartoffeln, Melasse (aus der Zuckerproduktion), Weizenstärke, Trockenschlempe aus der Herstellung von Bioethanol (z.B. DGG oder DGS), Eiscreme, Schokolade, Brot, Treber aus der Bierproduktion oder ähnliches. Dadurch sind vielzählige Kombinationen von Ingredienzien für Geflügelfeuchtfutter möglich, welche noch bei Bedarf oder je nach Geflügelart oder Alter des Geflügels mit Vitaminen oder Mineralien angereichert werden können.

An der Unterseite sind die Vorratsbehälter 6 in einer Art Trichterform verjüngt und weisen eine untere Klappe 26 auf, die geöffnet werden kann, um das Feuchtfutter 29 auf das Zuführförderband 5 zu laden. Die Klappe 26 dient auch einer Dosierung des Feuchtfutters. Die Vorratsbehälter 6 sind an ihrer Oberseite mit einer Zuführleitung 22 für einen Fermentationsauslöser versehen. Als Fermentationsauslöser können beispielsweise Lactobazillen verwendet werden, die sich im Laufe des Fermentationsprozesses zu Milchsäurebakterien entwickeln. Seitlich an den Vorratsbehältern 6 ist eine Warmwasserzuführleitung 30 vorhanden, mittels welcher warmes Wasser in den Vorratsbehälter 6 eingeleitet werden kann. Die Fermentationstanks sind mit Temperatursensoren 25 und mit einem Füllstandsanzeiger 24 versehen. Andere Einrichtungen, wie sie bei Fermentationsprozessen erforderlich sind, können ebenfalls an den Vorratsbehältern vorgesehen sein.

Die Herstellung von fermentiertem Feuchtfutter für die Geflügelfütterung nach der Erfindung erfolgt beispielsweise in der nachfolgend beschriebenen Art und Weise: Zunächst wird über die Nachfüllöffnung 21 ein Rohstoff in die Vorratsbehälter 6 eingefüllt. Anschließend wird der Tank über die Warmwasserzuführleitung 30 mit warmem Wasser aufgefüllt. Der Tank wird luftdicht abgeschlossen, und ein Fermentationsauslöser wird über die Leitung 22 in der erforderlichen Menge im Verhältnis zur Menge des Futterrohstoffs eingebracht. Der Innenraum der Vorratsbehälter 6 wird anschließend auf einer gleichmäßigen Temperatur von beispielsweise 25° C bis 35° C über einen Zeitraum von 10 bis 48 Stunden gehalten. In dieser Zeit läuft der Fermentationsprozess ab, wodurch insbesondere der pH-Wert des Futters auf einen vorbestimmten Wert von beispielsweise 3 bis 5 abgesenkt wird. Die Fermentation des Feuchtfutters hat den Vorteil, eine bessere Verdaulichkeit für die Tiere und eine höhere Futterqualität zu gewährleisten. Beim Fermentieren werden schädliche Bakterienstämme vernichtet, und das Futter wird so auch vorteilhafterweise konserviert, so dass eine längere Aufbewahrung des Feuchtfutters ohne ein Verderben ermöglicht wird. Das fermentierte Feuchtfutter für die Geflügelfütterung weist damit keinerlei Krankheitserreger auf. Alle schädlichen Bakterienstämme und schädlichen Stoffe werden durch den Fermentationsvorgang vernichtet. Nicht zuletzt kann ein solches fermentiertes Feuchtfutter auch eine immunstimulierende Wirkung haben, so dass die Gesundheit der Geflügeltiere hiermit auch noch erhöht wird. Das so hergestellte fermentierte Feuchtfutter, welches auch mit einem Vorfermentierungsschritt hergestellt werden kann, wird in den Vorratsbehältern 6 gelagert und für die bedarfsgerechte Verfütterung bereitgehalten. Zum Verfüttern werden die Klappen 26 einzeln oder gemeinsam geöffnet, und das Futter fällt aufgrund der Schwerkraft auf das Zuführförderband 5, welches es auf das schnell laufende Förderband 2 zur schnellen Verfütterung an eine große Mehrzahl von Geflügeltieren gleichzeitig transportiert. An der Unterseite des Zuführförderbandes 5 ist bei diesem Ausführungsbeispiel eine Reinigungsbürste 7 angebracht. Das Zuführförderband 5 kann alternativ auch ohne einen Neigungswinkel α, d. h. horizontal, montiert werden. Anstatt eines Zuführförderbandes 5 kann auch ein anderes Zuführmittel, beispielsweise eine Rüttelrinne in einem Neigungswinkel α oder ein Schneckenförderer, verwendet werden. Die Vorratsbehälter 6 können auch direkt über dem schnell laufenden Förderband 2 in einem Zuführabschnitt 3 montiert werden, so dass dann das Zuführförderband 5 vollständig obsolet wird.

Als Reinigungsvorrichtung 4 sind bei dem Ausführungsbeispiel der Fig. 4 drei hintereinandergeschaltete Reihen von Wasserhochdruckdüsen 8 vorgesehen. Die Reinigungsvorrichtung 4 kann auch weitere Reinigungsmittel aufweisen, wie beispielsweise eine Schabeinrichtung oder eine Ultraviolett-Entkeimungseinrichtung zur vollständigen Entkeimung der Oberfläche des Förderbandes 2.

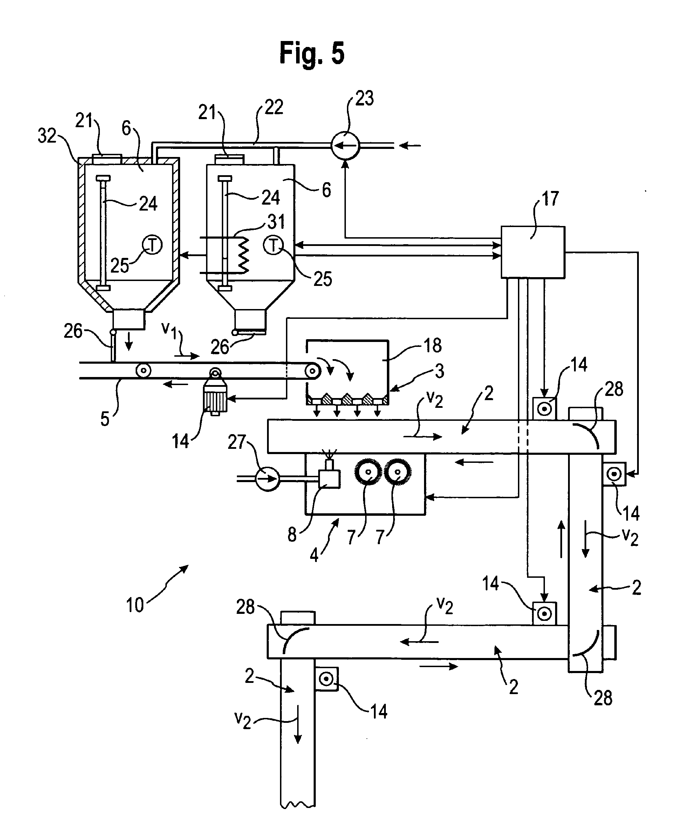

Die Fig. 5 zeigt in einer schematischen Ansicht ein fünftes Ausführungsbeispiel einer erfindungsgemäßen Futteranlage 10 mit zwei Vorratsbehältern 6 für insbesondere fermentiertes Feuchtfutter und einer Reihenschaltung von mehreren Förderbändern 2. Das fermentierte Feuchtfutter wird bei diesem Ausführungsbeispiel über zwei Vorratsbehälter 6 bereitgestellt, die auch hier als Fermentationstanks ausgebildet sind. Die Vorratsbehälter 6 weisen entweder eine Wärmeisolation 32 oder eine Heizeinrichtung 31 auf, mittels welcher eine konstante Innentemperatur der Vorratsbehälter 6 über einen gewissen Zeitraum aufrechterhalten werden kann. Eine Kombination von Wärmeisolation 32 und Heizeinrichtung 31 ist ebenfalls möglich. Wie bei dem vorherigen Ausführungsbeispiel sind auch hier die Vorratsbehälter 6 an der Oberseite mit einer Nachfüllöffnung 21 und einer Zuführleitung 22 für einen Fermentationsauslöser versehen, der mittels einer Pumpe 23 in die Behälter 6 gepumpt werden kann. Die Vorratsbehälter sind mit Füllstandsanzeigern 24 und jeweils einem Temperatursensor 25 ausgestattet, damit einerseits die Befüllung der Vorratsbehälter 6 erkennbar wird und andererseits eine für den Fermentationsprozess erforderliche Temperatur von beispielsweise 25° C bis 35° C über einen gewissen Zeitraum aufrechterhalten werden kann. An der Unterseite sind die trichterförmig verjüngten Vorratsbehälter 6 wiederum mit Klappen 26 ausgestattet, deren Öffnung ein Beladen eines Zuführförderbandes 5 mit fermentiertem Feuchtfutter ermöglicht. Das Zuführförderband 5 fördert das Feuchtfutter in eine Verteileinrichtung 18, die hier als eine kastenartige Verteileinrichtung mit einer Reihe von Auslassöffnungen an der Unterseite und keilförmigen Verteilelementen im Inneren realisiert ist. Dadurch wird eine relativ großflächigere Verteilung des Feuchtfutters auf dem Förderband 2 erreicht, welches dann das Feuchtfutter mit relativ hoher Geschwindigkeit entlang dem Fütterungsabschnitt transportiert, um die schnelle Verfütterung an eine große Anzahl von Geflügeltieren zu ermöglichen. Auch hier sind die Förderbänder 2 an der Unterseite mit einer Reinigungsvorrichtung 4 ausgestattet, die zur Vereinfachung in der Fig. 5 nur bei dem ersten Förderband 2 eingezeichnet ist. Die Reinigungsvorrichtung 4 besteht hier aus zwei hintereinandergeschalteten Bürsten und danach einer Wasserhochdruckdüse 8, die mit einer Hochdruckwasserpumpe 27 versorgt wird.

Die schnell laufenden Förderbänder 2 sind hier jeweils im rechten Winkel zueinander angeordnet, so dass am Ende eines Förderbandes 2 jeweils darunterliegend ein nachfolgendes Förderband 2 vorhanden ist, welches die restlichen Bestandteile des Feuchtfutters übernimmt und weitertransportiert. Dafür sind viertelkreisförmig gebogene Umlenkbleche 28 jeweils am Ende der Förderbänder 2 vorgesehen, die eine Umlenkung in Richtung des nachfolgenden Förderbandes 2 gewährleisten. Die Förderbänder 2 werden über jeweilige Antriebseinheiten 14, beispielsweise in Form von variabel steuerbaren Elektromotoren angetrieben. Bei diesem Ausführungsbeispiel nach der Fig. 5 ist ein Steuergerät 17 eingezeichnet. Das Steuergerät 17 ist angepasst, um einerseits den Fermentationsprozess und andererseits die Fördergeschwindigkeiten v₁, v₂ des Zuführförderbandes 5 und der Förderbänder 2 zu steuern. Das Steuergerät 17 dient ebenfalls der Steuerung der Reinigungsvorrichtung, so dass die Verfütterung von fermentiertem Feuchtfutter an das Geflügel bei diesem Ausführungsbeispiel im Wesentlichen vollautomatisch ablaufen kann. Hierzu sind jeweilige Steuerleitungen zwischen den einzelnen Bauteilen und Elementen der Futteranlage 10 und dem Steuergerät 17 vorgesehen, die schematisch in der Fig. 5 eingezeichnet sind. Die. Fördergeschwindigkeit _{V2} der schnell laufenden Förderbänder 2 wird durch das Steuergerät 17 vorzugsweise auf eine Geschwindigkeit in der Größenordnung von etwa 1,5 m/s eingestellt. Nach einem vorteilhaften Aspekt des erfindungsgemäßen Verfahrens zur Verfütterung von fermentiertem Feuchtfutter an Geflügel wird bei einer solchen Reihenschaltung von mehreren Förderbändern 2 zunächst das letzte Förderband 2 in der Reihe eingeschaltet, und dann werden anschließend die jeweiligen dahinterliegenden Förderbänder dazugeschaltet. Auf diese Weise wird verhindert, dass sich ein Rückstau oder eine Ansammlung von Futter am Ende eines Förderbandes einstellt und das Futter nicht ordnungsgemäß weitertransportiert werden kann.

Auch bei diesem Ausführungsbeispiel kann die Reinigungsvorrichtung 4 über weitere Reinigungselemente verfügen, wie zum Beispiel eine Schabeinrichtung oder eine Entkeimungsstation. Eine Entkeimungsstation kann zum Beispiel über eine Ultraviolett-(UV-)Lichtquelle realisiert werden, die eine vollständige Entkeimung des Förderbandes 2 ermöglicht. Als Rohstoffe für das fermentierte Feuchtfutter können hier in die Vorratsbehälter 6 verschiedene Bestandteile eingebracht werden. Beispiele für Rohstoffe für die Herstellung von fermentiertem Feuchtfutter sind weiter oben in dieser Anmeldung angegeben. Die Geschwindigkeit v₁ des Zuführförderbandes 5 kann vorzugsweise größer sein als die Geschwindigkeit v₂ der Förderbänder 2. Damit wird eine ausreichende Beladung der Förderbänder ermöglicht, und es wird berücksichtigt, dass die Geflügeltiere an den Förderbändern eine bestimmte Menge an Futter fressen, bevor das Futter an ein nachfolgendes Förderband weitergereicht wird. Damit ist gewährleistet, dass über die gesamte Strecke der in einer Reihenschaltung zueinander angeordneten Förderbänder 2 ausreichend Feuchtfutter für das Geflügel bereitgestellt wird.

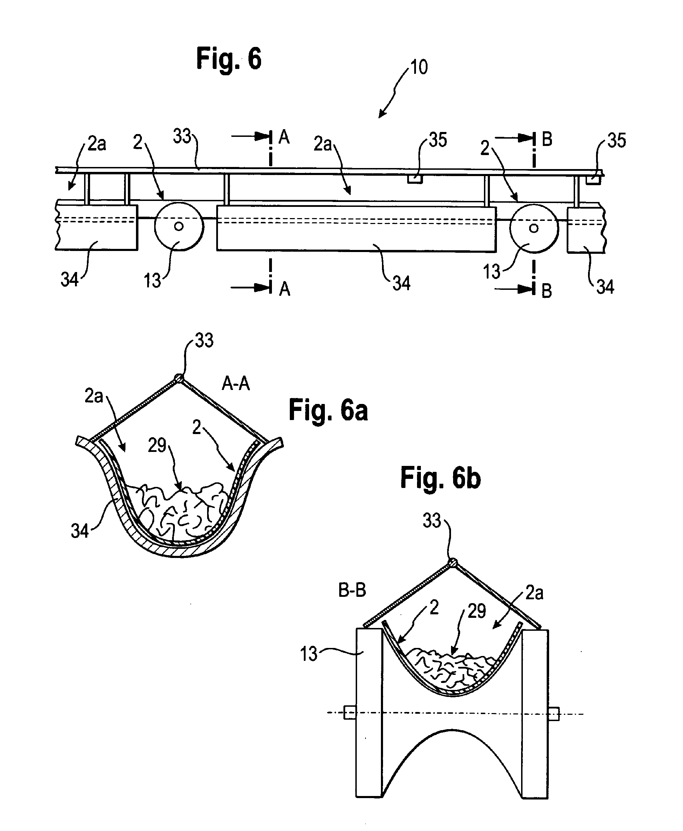

In den Fig. 6, 6a und 6b ist ein sechstes Ausführungsbeispiel einer erfindungsgemäßen Futteranlage mit rinnenförmigen Förderbändern gezeigt. Bei diesem Ausführungsbeispiel ist ein Förderband 2 in einer rinnenartigen Form vorgesehen, das aus mehreren Abschnitten besteht, die in einer Linie zueinander angeordnet sind. Die Förderbänder 2 sind im Fütterungsabschnitt 2a mit einer Sitzstange 33 versehen. Die Sitzstange 33 ist in etwa mittig über dem Fütterungsabschnitt 2a des Förderbandes 2 montiert, so dass die zu fütternden Geflügeltiere daran gehindert werden, das Förderband 2 selbst als Sitzgelegenheit zu nutzen. Das Förderband 2 setzt sich hier aus länglichen Rinnen 34 und dazwischen liegenden Rollen 13 zusammen. Die Rollen 13 und die Rinnen 34 weisen eine in etwa halbkreisförmige Form auf, so dass das Förderband 2a, welches darin geführt wird, eine durchgehende und bewegliche Fütterungsrinne bildet. Die Form der Rinne 34 und der Rollen 13 ist in den Querschnittsansichten der Fig. 6a und 6b gezeigt.

Auch bei diesem Ausführungsbeispiel wird vorzugsweise fermentiertes Feuchtfutter 29 an Geflügeltiere verfüttert, das mit den schnell laufenden Förderbändern 2 ausgebracht wird. Das fermentierte Feuchtfutter 29 kann auch erfindungsgemäß mit Trockenfutter gemischt werden oder es kann auch reines Trockenfutter mit den Förderbändern 2 verfüttert werden. Eine Mischung kann nach einem vorteilhaften Aspekt der Erfindung 50% Trockenfutter und 50% fermentiertes Feuchtfutter aufweisen. Alternativ kann 95% fermentiertes Feuchtfutter und 5% Trockenfutter oder 95%Trockenfutter und 5% Feuchtfutter verwendet werden. Dies ermöglicht eine bedarfsgerechte Einstellung der Futteranteile und eine auch hinsichtlich der Kosten und der Verträglichkeit optimierte und effiziente Fütterung von verschiedenen Geflügeltierarten. Wie bei den vorherigen Ausführungsbeispielen werden die schnell laufenden Förderbänder 2 aus Vorratsbehältern (in den Figuren nicht gezeigt) beladen und durch eine Steuerung gestartet. Für das Starten und Anhalten der Förderbänder 2 sind nach der Erfindung vorzugsweise Sensoren 35 vorgesehen, welche den Beladungszustand der Förderbänder 2 im Fütterungsabschnitt 2a erfassen. Als Sensoren 35 können optische Sensoren oder Feuchtigkeitssensoren eingesetzt werden. Beispielsweise können die Sensoren 35 NIR-Sensoren oberhalb der Förderbänder 2 sein, mit welchen der Feuchtigkeitsgehalt auf den Bändern 2 über eine Nahinfrarotspektroskopie gemessen werden kann. Wenn die Feuchtigkeit einen bestimmten Schwellenwert unterschreitet, kann dann durch eine entsprechende Steuerung eine erneute Beladung der Förderbänder 2 durchgeführt werden. Alternativ oder ergänzend kann auch ein Taktgeber oder eine Zeitschaltuhr eingesetzt werden, um den Betrieb der Förderbänder 2 zu steuern. Bei dem Ausführungsbeispiel der Figuren 6, 6a und 6b ist auch eine Reinigungsvorrichtung 4 in einem Abschnitt hinter dem Fütterungsabschnitt 2a vorgesehen, die jedoch hier nicht direkt unterhalb dem dargestellten Fütterungsabschnitt liegt. Die Reinigungsvorrichtung 4 kann die Form der zuvor beschriebenen Vorrichtungen aufweisen. Sie liegt jedoch bei diesem Beispiel entfernt von dem Fütterungsabschnitt, beispielsweise in einem Untergeschoß des Stalls, durch welches das schnell laufende Förderband 2 geführt wird.

Die verschiedenen, dargestellten Ausführungsbeispiele lassen sich in ihren Komponenten und Aspekten auch untereinander kombinieren, insbesondere was die Form der Reinigungsvorrichtung 4, die Rohstoffe des Futters 29 und die Beladung sowie die Steuerung der Förderbänder 2 betrifft. Auch kann die Anordnung der Förderbänder 2 zueinander je nach den örtlichen Gegebenheiten variieren.

## Patentansprüche

1. Futteranlage (10) für die Bereitstellung von Geflügelfutter, insbesondere von fermentiertem Feuchtfutter, für eine Mehrzahl von Geflügeltieren in einer Freiland- oder Stallhaltung, mit mindestens einer Fördereinrichtung (1), welche für das Geflügel mindestens abschnittsweise zugänglich ist, und mit einem Zuführabschnitt (3), über welchen Futter manuell oder maschinell bzw. automatisch zugeführt werden kann, **dadurch gekennzeichnet, dass** die Fördereinrichtung (1) mindestens ein schnell laufendes Förderband (2) mit einem oberen Fütterungsabschnitt (2a) und einem Rückführabschnitt (2b) ist und dass eine Reinigungsvorrichtung (4) zum Entfernen von Resten des Futters in Förderrichtung nach dem Fütterungsabschnitt (2a) an dem Förderband (2) vorgesehen ist.

2. Futteranlage (10) nach Anspruch 1, **dadurch gekennzeichnet, dass** die Reinigungsvorrichtung (4) speziell ausgebildet ist, um Reste von Feuchtfutter von der Oberfläche des Förderbandes (2) im Wesentlichen rückstandsfrei zu entfernen.

3. Futteranlage (10) nach Anspruch 1 oder 2, **dadurch gekennzeichnet, dass** die Reinigungsvorrichtung (4) eine mit mindestens einer Bürste (7) versehene Einrichtung aufweist.

4. Futteranlage (10) nach einem der vorangegangenen Ansprüche, **dadurch gekennzeichnet, dass** die Reinigungsvorrichtung (4) eine mit Hochdruckdüsen (8) ausgestattete Bandwascheinrichtung aufweist.

5. Futteranlage (10) nach einem der vorangegangenen Ansprüche, **dadurch gekennzeichnet, dass** die Reinigungsvorrichtung (4) im Rückführabschnitt (2b) an einer Unterseite des Förderbandes (2) angeordnet ist.

6. Futteranlage (10) nach einem der vorangegangenen Ansprüche, **dadurch gekennzeichnet, dass** das Förderband (2) mindestens im Bereich der Fütterung des Geflügels bzw. im Fütterungsabschnitt (2a) eine obere Abdeckung (11) mit seitlichen Öffnungen (12) aufweist.

7. Futteranlage (10) nach Anspruch 6, **dadurch gekennzeichnet, dass** die Höhe der Abdeckung (11) und/oder die Größe der Öffnungen (12) auf die jeweilige Geflügelart abgestimmt oder einstellbar ist.

8. Futteranlage (10) nach einem der vorangegangenen Ansprüche, **dadurch gekennzeichnet, dass** mehrere Förderbänder (2) vorgesehen sind, welche in Reihenschaltung zueinander angeordnet sind und betrieben werden können.

9. Futteranlage (10) nach einem der vorangegangenen Ansprüche, **dadurch gekennzeichnet, dass** sie mindestens einen Vorratsbehälter (6) für fermentiertes Feuchtfutter aufweist und dass der Vorratsbehälter (6) zum schnellen Transportieren und Bereitstellen von fermentiertem Feuchtfutter mittels eines Zuführförderbandes (5) oder ähnlichem mit dem Zuführabschnitt (3) verbunden ist.

10. Futteranlage (10) nach einem der vorangegangenen Ansprüche, **dadurch gekennzeichnet, dass** das Förderband (2) mindestens im Fütterungsabschnitt (2a) einen ovalen oder gebogenen rinnenförmigen Querschnitt aufweist.

11. Futteranlage (10) nach einem der vorangegangenen Ansprüche, **dadurch gekennzeichnet, dass** im Zuführabschnitt (3) eine Verteileinrichtung (18) vorgesehen ist, welche ausgebildet ist, um insbesondere fermentiertes Feuchtfutter über eine größere Fläche auf dem Förderband (2) zu verteilen.

12. Verfahren zur Bereitstellung von Geflügelfutter, insbesondere von fermentiertem Feuchtfutter, für eine Mehrzahl von Geflügeltieren in einer Freiland- oder Stallhaltung, wobei über mindestens eine Fördereinrichtung (1) in Form mindestens eines schnell laufenden Förderbandes (2) das Futter dem Geflügel mindestens abschnittsweise in einem Fütterungsabschnitt (2a) zugänglich gemacht wird, **gekennzeichnet durch** die Schritte:
a) Manuelles oder automatisches Zuführen von fermentiertem Feuchtfutter aus mindestens einem Vorratsbehälter (6) auf das schnell laufende Förderband (2);
b) Befördern des Feuchtfutters entlang dem Fütterungsabschnitt (2b) mit einer vordefinierten, vergleichsweise hohen Geschwindigkeit; und
c) Reinigen des mindestens einen Förderbandes (2) in einem Abschnitt nach dem Fütterungsabschnitt (2b) bezogen auf die Förderrichtung des Förderbandes (2).

13. Verfahren nach Anspruch 12, **dadurch gekennzeichnet, dass** die Reinigung des Förderbandes in Schritt c) mit mindestens einer Bürste (7) und/oder mindestens einer Wasserhochdruckdüse (8) durchgeführt wird.

14. Verfahren nach Anspruch 12 oder 13, **dadurch gekennzeichnet, dass** die Geschwindigkeit des mindestens einen schnell laufenden Förderbandes (2) eingestellt wird in Abhängigkeit von der Art des Geflügels und/oder der Länge des Förderbandes (2), derart, dass eine im Wesentlichen gleichmäßig verteilte Futteraufnahme entlang dem Fütterungsabschnitt (2b) durch alle Tiere gewährleistet wird.

15. Verfahren nach einem der Ansprüche 12 bis 14, **dadurch gekennzeichnet, dass** in Schritt a) eine relativ großflächige Verteilung des zugeführten Futters auf dem Förderband (2), insbesondere des fermentierten Feuchtfutters, mittels einer Verteileinrichtung (18), erfolgt.

16. Verfahren nach einem der Ansprüche 12 bis 15, wobei mehrere in Reihe geschaltete Förderbänder (2) vorgesehen sind, **dadurch gekennzeichnet, dass** das in Förderrichtung letzte Förderband (2) zuerst eingeschaltet wird und sukzessive die anderen Förderbänder (2) in einer Reihenfolge entgegen der Förderrichtung eingeschaltet werden.
